Europäisches Patentamt

European Patent Office

Office européen des brevets

(11) Publication number: **0 080 807**
**B1**

(12) **EUROPEAN PATENT SPECIFICATION**

(45) Date of publication of patent specification: **01.06.88**

(51) Int. Cl.⁴: **H 02 B 1/04**

(21) Application number: **82305729.4**

(22) Date of filing: **28.10.82**

(54) Adapter for mounting switch onto panel.

(30) Priority: **02.12.81 JP 179970/81 u**
**02.12.81 JP 179971/81 u**
**02.12.81 JP 179972/81 u**
**30.04.82 JP 64665/82 u**

(43) Date of publication of application:
**08.06.83 Bulletin 83/23**

(45) Publication of the grant of the patent:
**01.06.88 Bulletin 88/22**

(84) Designated Contracting States:
**DE FR GB IT**

(56) References cited:
**FR-A-2 234 681**
**FR-A-2 388 471**

(73) Proprietor: **IZUMI DENKI CORPORATION**
**10-40, Mikunihonmachi-1-chome**
**Yodogawa-ku Osaka (JP)**

(72) Inventor: **Fujita, Teizo**
**118-135, Kitakasugaoka-1-chome**
**Ibaraki-shi (JP)**
Inventor: **Kimura, Haruo**
**44-5, Tsunoe-2-chome**
**Takatsuki-shi (JP)**

(74) Representative: **Miller, Joseph et al**
**J. MILLER & CO. Lincoln House 296-302 High**
**Holborn**
**London WC1V 7JH (GB)**

Courier Press, Leamington Spa, England.

## Description

The present invention relates to an adapter for mounting a switch in a panel hole, and, particularly to an adapter for use when an actuating switch such as a push-button switch is to be mounted in a panel hole in such a way that a cylindrical portion of the switch passes through a hole previously formed in the panel. Such a switch has been fixed to the panel by appropriate means such as a screw when the outer diameter of the cylindrical portion is smaller than the hole.

With respect to such an actuating switch as mentioned above, in many countries the outer diameter of the cylindrical portion of the switch is standardized by their own domestic standard or the like for affording convenience in use as well as in manufacturing such switches. Further, various values are set as the diameter by the domestic standard. For example, two kinds of values, 30 mm and 25 mm, are set in Japan and a value, 22 mm, is set in Europe, as the standardized outer diameter of the cylindrical portion of an industrial-purpose actuating switch. Thus, in a worldwide sense, there are various kinds of standardized values for the outer diameter of the cylindrical portion of the actuating switches. Accordingly, the inner diameter of a hole previously formed in a panel for mounting an actuating switch has to correspond to a selected one of various kinds of standardized values. For this, on the part of users, it has been necessary to previously form a hole having a standardized diameter properly selected depending on either the area of a panel in which the hole is to be formed and in which an actuating switch is to be mounted or depending on the number or size or the like of equipment to be mounted on the panel, and then it has been necessary to selectively procure an actuating switch which is in conformity with the prepared hole. On the part of the makers, therefore, it has been necessary to previously manufacture and stock various actuating switches having respective cylindrical portions which are different from one another in their outer diameter, resulting in an increase in expense in view of having to provide metal patterns and in view of stock management difficulties.

To eliminate such disadvantages as mentioned above, an object of the present invention is to provide an adapter for properly mounting an actuating switch having a cylindrical portion the outer diameter of which is smaller than the inner diameter of a hole previously formed in a panel to which the switch is mounted.

In FR-A-2,388,471 there is disclosed an adapter for use in mounting in a panel hole a switch having at least one contact section, a switch actuating section, and an actuator which is movably mounted in a hollow cylindrical portion of the switch actuating section, the said adapter comprising an annular flange having a flange hole. In the adapter of this citation, however, the annular flange does not engage either the panel hole or the hollow cylindrical portion and the shape of the adapter is complicated and difficult to manufacture. Moreover, in the case of the citation, both the hollow cylindrical portion of the switch and the adapter are fitted to the panel from the rear side of the latter which involves an awkward operation.

According, therefore, to the present invention, there is provided an adapter for use in mounting in a panel hole a switch having at least one contact section, a switch actuating section, and an actuator which is movably mounted in a hollow cylindrical portion of the switch actuating section, the said adapter comprising an annular flange having a flange hole characterised in that the annular flange is constituted by a plurality of angularly spaced apart step portions of the adapter, the radially inner surface of each step portion having a diameter equal to the diameter of the flange hole so that the hollow cylindrical portion may be mounted in and in engagement with the radially inner surfaces of the step portions, and the radially outer surface of each step portion having a diameter substantially equal to that of the said panel hole so that the adapter may be mounted in and in engagement with the panel hole.

Thus in the construction of the present invention, the cylindrical portion of the switch and the adapter may be presented to the panel from opposite sides, thus simplifying installation.

The invention is illustrated, merely by way of example, in the accompanying drawings, in which:-

Figure 1 is a partially sectional elevation illustrating a push button switch, as an example of an actuating switch, which is normally mounted on a panel;

Figure 2 is an elevational view in section of a combination of an actuating switch and an embodiment of an adapter according to the present invention, when it has been mounted on a panel;

Figure 3 is an elevation in section of an adapter shown in Figure 2; and

Figure 4 is a bottom view of the adapter shown in Figure 2.

Although a preferred embodiment of the present invention will be described, the construction of an actuating switch to which the adapter according to the present invention is applied will be described in brief prior to the description of the said embodiment.

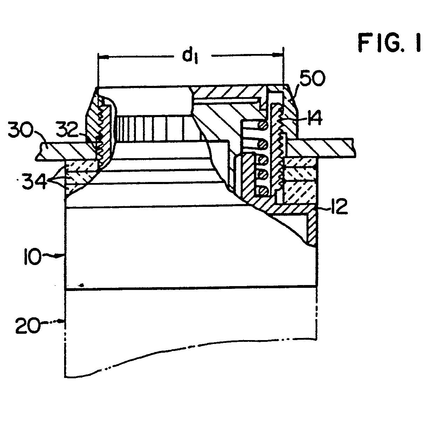

Ordinarily, an actuating switch, such as a push button switch, an illumination type push button switch, a cam switch or the like, has a construction in which a given number of stacked contact sections 20 are coupled with a switch actuating section 10 having a rear box-like portion 12 and a cylindrical portion 14 projecting upwardly from the box-like portion 12, as shown in Figure 1. When such an actuating section 10 is secured to a panel 30, the cylindrical portion 14 is inserted from the back side of the panel 30 into a mounting hole 32 previously formed in the panel 30 and having an inner diameter which is substantially equal to the outer diameter $d_1$ of the cylindrical portion 14 but a little larger than the latter to enable the latter to loosely pass through the hole 32, with packing rings 34 disposed between the upper side shoulder portion of the rear box-like portion 12 and the back surface of the panel 30. Then, the top portion of the cylindrical portion 14 is screwed up by a cap 50 from the front side of the panel 30.

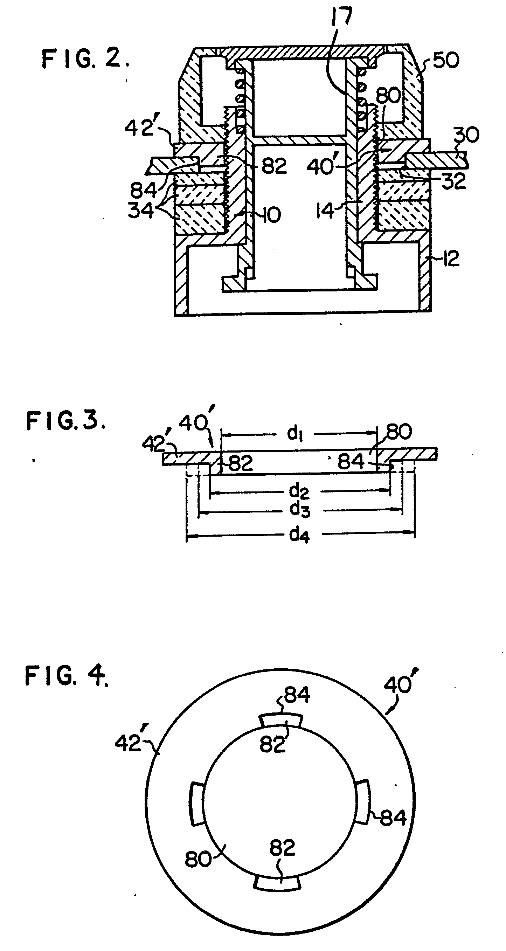

In Figures 2-4, an embodiment of an adapter according to the invention for securing an actuating section of a switch to a panel is shown in combination with such an actuating switch.

If desired, the adapter may be made entirely of a resin material, although in this case the adapter will be expensive because it is necessary to use a soft resin material in order to provide elasticity.

In Figures 2-4, an adapter 40' has a flange portion 42' which is formed at its substantially central portion with a through hole 80 through which a cylindrical portion 14 of an actuating section 10 may pass. The flange portion 42' is further formed with downwardly projecting step portions 82 at the lower surface thereof. According to this embodiment, various adapters respectively having various outer diameters such as $d_2$, $d_3$, $d_4$, at the projecting step portions 82 may be provided as shown in Figure 3. The values $d_2$, $d_3$, $d_4$ ... of the diameter are such as to be in agreement with the values previously defined by various standards. The projecting step portions 82 may include at least two sector shaped step portions formed discretely at equal angular distances as shown in Figure 4, the radially inner surface of each step portion 82 having a diameter equal to the diameter of the flange hole 80 so that the hollow cylindrical portion 14 may be mounted in and in engagement with the radially inner surfaces of the step portions 82, and the radially outer surface of each step portion 82 having a diameter substantially equal to that of the said panel hole 32 so that the adapter 42' may be mounted in and in engagement with the panel hole 32.

In mounting an actuating switch, one of the various adapters is selected which has an outer diameter at its projecting step portions 82 which is substantially the same as the diameter of a mounting hole 32 formed in a panel 30 to which hole the actuating switch is to be attached. After ring packings 34 have been inserted onto the cylindrical portion 14 of the actuating section 10, the cylindrical portion 14 is inserted into the mounting hole 32 from the back of the panel 30. Thereupon the adapter 40' is inserted from the front side of the panel 30 with its step portions 82 underside onto the cylindrical portion 14 which projects from the front surface of the panel 30 and then the cap 50 is attached to the cylindrical portion 14 from the front side of the adapter 40 so as to fasten the actuating section 10 of the switch. The cap 50 engages the adapter 40' and is in threaded engagement with the cylindrical portion 14. Being fastened, the radially outer surfaces 84 of the step portions 82 of the adapter 40' are made to abut on the inner periphery of the mounting hole 32 and at the same time the lower surface of the flange portion 42' is made to abut on the front surface of the panel 30. In this manner, the adapter 40' is disposed between the actuating section 10 and the panel 30 and fixed to the panel together with the actuating section 10.

Although the thickness of the projecting step portions 82 is preferably selected to be equal to or thinner than the thickness of the panel 30, it is not always limited to this and may be arranged to be greater than the thickness of the panel 30. In the latter case, the inner diameter of the uppermost ring packing 34 may be larger than the diameter of the radially outer surfaces 84 of the step portions 82.

## Claims

1. An adapter (40') for use in mounting in a panel hole (32) a switch (10, 14, 17, 20) having at least one contact section (20), a switch actuating section (10), and an actuator (17) which is movably mounted in a hollow cylindrical portion (14) of the switch actuating section (10), the said adapter (40') comprising an annular flange (82) having a flange hole (80) characterised in that the annular flange is constituted by a plurality of angularly spaced apart step portions (82) of the adapter (40'), the radially inner surface of each step portion (82) having a diameter equal to the diameter of the flange hole (80) so that the hollow cylindrical portion (14) may be mounted in and in engagement with the radially inner surfaces of the step portions (82), and the radially outer surface (84) of each step portion (82) having a diameter substantially equal to that of the said panel hole (32) so that the adapter (42') may be mounted in and in engagement with the panel hole (32).

2. An adapter as claimed in claim 1 characterised in that each step portion (82) is sector shaped.

3. An adapter as claimed in claim 1 or 2 characterised in that there are four equi-angularly spaced apart step portions (82).

4. An adapter as claimed in any preceding claim characterised in that the adapter (40') is part of an assembly comprising a panel (30) provided with the said panel hole (32) and the said switch (10, 14, 17, 20), the radially inner surfaces of the step portions (82) engaging the hollow cylindrical portion (14) and the radially outer surfaces (84) of the step portions (82) engaging the panel hole (32).

5. An adapter as claimed in claim 4 characterised in that the cap (50) is provided which engages the adapter (40') and which is in threaded engagement with the hollow cylindrical portion (14).

## Patentansprüche

1. Anpassungsvorrichtung (40') für den Einbau eines Schalters (10, 14, 17, 20) mit mindestens einem Kontaktteil (20), einem Schalterbetätigungsteil (10) und einem bewegbar in einen hohlzylindrischen Abschnitt (14) des Schalterbetätigungsteils (10) eingesetzten Betätigungselement (17) in eine Plattenbohrung (32), wobei die Anpassungsvorrichtung (40') einen Ringflansch (82) mit einer Flanschbohrung (80) aufweist, dadurch gekennzeichnet, daß der Ringflansch aus einer Anzahl von auf Winkelabstände verteilten Stufenabschnitten (82) der Anpassungsvorrichtung (40') gebildet ist, die radiale Innenfläche jedes Stufenabschnitts (82) einen Durchmesser entsprechend dem Durchmesser der Flanschbohrung (80) aufweist, so daß der hohlzylindrische Abschnitt (14) in Eingriff mit den radialen Innenflächen der Stufenabschnitte (82) in diese einbaubar ist, und die radiale Außenfläche (84) jedes Stufenabschnitts (82) einen praktisch dem Durchmesser der plattenbohrung (32) entsprechenden Durchmesser aufweist, so daß die Anpassungsvorrichtung (42' bzw. 40') in Eingriff mit der Plattenbohrung (32) in diese einbaubar ist.

2. Anpassungsvorrichtung nach Anspruch 1, dadurch gekennzeichnet, daß jeder Stufenabschnitt (82) sektorförmig ausgebildet ist.

3. Anpassungsvorrichtung nach Anspruch 1 oder 2, dadurch gekennzeichnet, daß vier auf gleiche Winkelabstände verteilte Stufenabschnitte vorgesehen sind.

4. Anpassungsvorrichtung nach einem der vorangehenden Ansprüche, dadurch gekennzeichnet, daß die Anpassungsvorrichtung (40') einen Teil einer Anordnung aus einer mit der Plattenbohrung (32) versehenen Platte (30) und dem Schalter (10, 14, 17, 20) bildet, die radialen Innenflächen der Stufenabschnitte (82) am (in den) hohlzylindrischen Abschnitt (14) angreifen bzw. eingreifen und die radialen Außenflächen (84) der Stufenabschnitte (82) an der (in die) Plattenbohrung (32) angreifen bzw. eingreifen.

5. Anpassungsvorrichtung nach Anspruch 4, dadurch gekennzeichnet, daß eine Kappe (50) vorgesehen ist, die an der Anpassungsvorrichtung (40') anliegt und die in Schraubverbindung mit dem hohlzylindrischen Abschnitt (14) steht.

**Revendications**

1. Adaptateur (40') destiné à être utilisé pour monter, dans le trou (32) d'un panneau, un interrupteur (10, 14, 17, 20) comprenant au moins une zone de contact (20), une zone de commutation (10) et un organe de manoeuvre (17) logé, avec faculté de mouvement, dans une partie cylindrique creuse (14) de la zone de commutation (10), ledit adaptateur (40') présentant une collerette annulaire (42') percée d'un trou (80), caractérisé par le fait que la collerette annulaire est constituée par de multiples zones étagées (82) de l'adaptateur (40') distantes angulairement les unes des autres, la surface radialement interne de chaque zone étagée (82) possédant un diamètre égal au diamètre du trou (80) de la collerette, de telle sorte que la partie cylindrique creuse (14) puisse être montée dans les zones étagées (82), contre les surfaces radialement internes desquelles elle vient s'appliquer; et la surface radialement interne (84) de chaque zone étagée (82) présentant un diamètre sensiblement égal à celui dudit trou (32) pratiqué dans le panneau, de sorte que l'adaptateur (42') peut être monté dans ce trou (32) de panneau, contre lequel il vient s'appliquer.

2. Adaptateur selon la revendication 1, caractérisé par le fait que chaque zone étagée (82) est configurée en secteur.

3. Adaptateur selon la revendication 1 ou 2, caractérisé par le fait qu'il comprend quatre zones étagées (82) équidistantes angulairement.

4. Adaptateur selon une quelconque revendication précédente, caractérisé par le fait que cet adaptateur (40') fait partie d'un ensemble comprenant un panneau (30) percé du trou (32) précité et ledit interrupteur (10, 14, 17, 20), les surfaces radialement internes des zones étagées (82) venant s'appliquer contre la partie cylindrique creuse (14), et les surfaces radialement externes (84) des zones étagées (82) venant s'appliquer contre le trou (32) du panneau.

5. Adaptateur selon la revendication 4, caractérisé par le fait qu'il est prévu un capuchon (50) qui vient s'appliquer contre cet adaptateur (40'), et est en prise par vissage avec la partie cylindrique creuse (14).

FIG. 1

**FIG. 2.**

**FIG. 3.**

**FIG. 4.**